Europäisches Patentamt

European Patent Office

Office européen des brevets

(19)

(11) Publication number: **0 106 469**
**B1**

(12) **EUROPEAN PATENT SPECIFICATION**

(45) Date of publication of patent specification: **14.01.87**

(21) Application number: **83305005.7**

(22) Date of filing: **31.08.83**

(51) Int. Cl.⁴: **C 07 C 121/75,**
**C 07 C 120/00, A 01 N 53/00**

(54) Insecticidal product and preparation thereof.

(30) Priority: **11.10.82 GB 8228983**
**28.03.83 GB 8308507**

(43) Date of publication of application:
**25.04.84 Bulletin 84/17**

(45) Publication of the grant of the patent:
**14.01.87 Bulletin 87/03**

(84) Designated Contracting States:
**AT BE CH DE FR GB IT LI LU NL SE**

(56) References cited:
**GB-A-2 000 764**
**GB-A-2 064 528**

**PESTICIDE SCIENCE, vol. 11, no. 2, 1980, pages
156-164, Society of Chemical Industry, P. D.
BENTLEY et al. : "Fluorinated analogues of
chrysanthemic acid"**

(73) Proprietor: **IMPERIAL CHEMICAL INDUSTRIES
PLC**
**Imperial Chemical House Millbank**
**London SW1P 3JF (GB)**

(72) Inventor: **Robson, Michael John**
**6, Farnham Close**
**Bracknell Berkshire (GB)**
Inventor: **Crosby, John**
**12, Oakwood Court**
**Bowden, Altrincham, Cheshire (GB)**

(74) Representative: **Bishop, Nigel Douglas et al**
**Imperial Chemical Industries PLC Legal
Department: Patents PO Box 6 Bessemer Road
Welwyn Garden City Herts, AL7 1HD (GB)**

Courier Press, Leamington Spa, England.

**Description**

This invention relates to an insecticidal product and methods of preparing it.

The compound α - cyano - 3 - phenoxybenzyl *cis* - 3 - (Z - 2 - chloro - 3,3,3 - trifluoroprop - 1 - en - 1 - yl) - 2,2 - dimethylcyclopropane carboxylate, also known by its common name of cyhalothrin, its preparation and insecticidal use is described *inter alia* in US Patent No. 4,183,948. This product is a mixture of four isomers which may be conveniently described as follows:

Isomer A—the ester derived from the (+)-*cis*-acid and the α-(S)-alcohol.
Isomer B—the ester derived from the (−)-*cis*-acid and the α-(R)-alcohol.
Isomer C—the ester derived from the (+)-*cis*-acid and the α-(R)-alcohol.
Isomer D—the ester derived from the (−)-*cis*-acid and the α-(S)-alcohol.

Cyhalothrin itself contains typically from 40—60% by weight of isomers A and B and 60—40% by weight of isomers C and D and is a viscous liquid at the ambient temperature. It cannot be induced to crystallise by cooling.

Now isomer A and isomer B have identical physical properties, e.g. solubility, melting point, etc, differing only in the direction in which they rotate the plane of polarised light, and as such represent a pair of enantiomers. Similarly, isomer C and isomer D represent a second enantiomeric pair.

It is known from P. D. Bentley et al, Pestic. Sci., *11*, (2), 156—64 (1980) that Isomer A is the most active insecticide of the four isomers and that isomers B and D were insecticidally inactive in tests against houseflies (*Musca domestica*). Isomer A is in fact about 25 times more active than the known insecticide permethrin in this test, making it one of the most active synthetic insecticides yet reported. Although it would be desirable to use isomer A alone as the active ingredient of insecticidal preparations, this is not easy to achieve in an economical manner because this requires that the acid and alcohol moieties of the isomer be prepared by chiral synthetic techniques and reacted together in a manner which does not change the chirality. Such techniques have not yet been developed to a level where such a synthesis can be carried out in an economic manner without the co-production of unwanted isomeric products which require to be separated using expensive reagents.

We have now discovered a technique whereby the pair of enantiomers represented by isomer A and isomer B can be readily separated from isomer C and isomer D by physical means not requiring chiral synthesis or chemical resolution, and that insecticidal products of acceptable efficacy can be prepared in an economic manner using the enantiomer pair.

Accordingly the present invention provides a process for obtaining a crystalline material (hereinafter called "the Product") consisting essentially of the enantiomeric pair of isomers represented by (S) - α - cyano - 3 - phenoxybenzyl (1R, *cis*) - 3 - (Z - 2 - chloro - 3,3,3 - trifluoroprop - 1 - en - 1 - yl) - 2,2 - dimethylcyclopropane carboxylate and (R) - α - cyano - 3 - phenoxybenzyl (1S,*cis*) - 3 - (Z - 2 - chloro - 3,3,3 - trifluoroprop - 1 - en - 1 - yl) - 2,2 - dimethylcyclopropane carboxylate in racemic proportions and substantially free from any other isomer of α - cyano - 3 - phenoxybenzyl (3 - (2 - chloro - 3,3,3 - trifluoroprop - 1 - en - 1 - yl) - 2,2 - dimethylcyclopropane carboxylate, which comprises the steps of:—

(a) forming a solution of cyhalothrin with an organic solvent selected from lower alkanols containing up to 6 carbon atoms and liquid alkanes containing up to 8 carbon atoms,

(b) cooling the solution to a temperature within the range −20°C to +10°C and adding a quantity of crystals of the enantiomeric pair of isomers to the cooled solution, the added crystals remaining thereafter in the solid undissolved state,

(c) maintaining the solution at a temperature within the said range for a sufficient period to allow the crystalline material to precipitate from the solution, and

(d) separating the precipitated crystalline material from the solution, and

(e) optionally, if required, subjecting it to recrystallisation until it is substantially free from any other isomer of α - cyano - 3 - phenoxybenzyl 3 - (2 - chloro - 3,3,3 - trifluoroprop - 1 - en - 1 - yl) - 2,2 - dimethylcyclopropane carboxylate.

By 'substantially free' is meant that not more than 10% by weight of the Product is represented by the combined weight of any other isomers of cyhalothrin.

Preferred alkanol solvents are ethanol, iso-propanol, butan-1-ol, butan-2-ol, pentan-1-ol, and iso-propanol/*t*-butanol (1:1), isopropanol/1,2-ethanediol (2:1). Isopropanol is particularly preferred. Preferred liquid alkane solvents are *n*-hexane and *n*-heptane.

By a concentrated solution is meant preferably one containing from 2:1 to 1:5, and most preferably 1:1, parts by weight of cyhalothrin:solvent.

The cyhalothrin used in this process may be contaminated with up to 10% by weight of the corresponding *trans* isomers and (*E*)-isomers. Preferably cyhalothrin of at least 95% purity is used since this usually provides the Product in higher yield and purity.

If the process is performed using a quantity of added crystals of the enantiomeric pair of isomers this usually shortens the time required to effect precipitation of the Product from the solution. (A quantity of the enantiomer pair of isomers of sufficient purity to be added may be obtained by subjecting cyhalothrin to high performance liquid chromatography (HPLC) to separate the desired enantiomeric pair of isomers from the other isomers present).

The process is preferably conducted by preparing the solution using slight warming if necessary, and then cooling the solution to a temperature in the range 0 to 10°C for a first period during which time a substantial amount of Product crystallises, and thereafter further cooling the solution to a temperature in the range −15 to −5°C for a second period until crystallisation is substantially complete before collecting the precipitated Product.

If recrystallisation is required to free the Product from other isomers which may have coprecipitated with the Product this may be achieved by using any suitable recrystallisation solvent, for example, the solvents referred to above as useful in the process of the invention.

This invention also provides the Product as a new material, that is the enantiomeric pair of isomers represented by (S) - α - cyano - 3 - phenoxybenzyl (1R,cis) - 3 - (Z - 2 - chloro - 3,3,3 - trifluoroprop - 1 - en - 1 - yl) - 2,2 - dimethylcyclopropane carboxylate and (R) - α - cyano - 3 - phenoxybenzyl (1S,cis) - 3 - (2 - chloro - 3,3,3 - trifluoroprop - 1 - en - 1 - yl) - 2,2 - dimethylcyclopropane carboxylate in racemic proportions and substantially free from any other isomer of α - cyano - 3 - phenoxybenzyl 3 - (2 - chloro - 3,3,3 - trifluoroprop - 1 - en - 1 - yl) - 2,2 - dimethylcyclopropane carboxylate and having a melting point greater than 47°C.

The Product may be precipitated in one of two different forms, hereinafter called "Product I" and "Product II". Typically Product I precipitates only slowly and the period of time required to achieve a reasonable yield is preferably at least from 7 to 15 days or even longer. Product II precipitates out much more rapidly and good yields can be achieved in a time period of from 1 to 6 days.

Where the added crystals of the enantiomeric pair of isomers were obtained by HPLC separation then the precipitate is usually in the form of Product I. If this precipitated material is recrystallised several times and then used to nucleate further crystallisations then the chances of obtaining Product II are increased, although it may be necessary to perform a number of crystallisations before Product II is actually precipitated. Product II, once obtained, when used to nucleate further crystallisations will always cause the Product to precipitate in the form of Product II.

Product I is white crystalline material having a melting point within the range 36—42°C when precipitated by the above process. When freed from contamination by residual amounts of isomer C and isomer D by recrystallisation Product I melts at 41—42°C. Infra red spectral analysis shows it to consist of a conglomerate of mixed crystals in which each individual crystal is composed of molecules of a single isomer, either isomer A or isomer B, there being approximately equal amounts of crystals of each isomer. Product I is therefore a racemic mixture. These crystals are fine needles which, as indicated above, are relatively slow to crystallise out even from concentrated solutions of cyhalothrin. Collecting the Product by filtration can also be slow due to the tendency of the fine needles to clog the filter.

Product II is characterised by having a melting point above 47°C, typically 48 to 50°C. This form crystallises out more rapidly and the crystals are rhomboid-like in shape but are in fact monoclinic. This permits easier collection by filtration since the crystals of this form do not tend to clog the filter in the manner of the needles of the lower melting form described above.

Infra-red spectroscopic and X-ray crystallographic analysis of this higher melting form indicate that each individual crystal is composed of equal amounts of isomer A and isomer B arranged regularly in the crystal lattice. This form is thus a racemic compound.

Data concerning the crystalline form of Product II was collected by examining the X-ray diffraction characteristics of a crystal of dimensions ca. $0.13 \times 0.13 \times 0.12$ mm using a Philips PW1100 four circle X-ray diffractometer with Mo-$K_\alpha$ radiation from a graphite monochromator. A θ—2θ scan mode was used with a scan speed of $0.5 s^{-1}$, a scan width of 0.8° and reflections with $3 \leq \theta \leq 25°$ were examined using the technique described by K. R. Adam et al, *Inorg. Chem.*, 1980, *19*, 2956. The data obtained for Product II may be summarised as follows:—

Crystal form: monoclinic
Space group: *C2/c*
$a=34.764(5)$, $b=7.023(2)$, $c=18.624(3)$ Å
$\beta=101.95(3)$Å, $U=4448.46$ Å$^3$, $Z=8$
Density$=1.343$ g . cm$^{-3}$, F(000)$=1856$.
(Mo-$K_\alpha$)$=1.77$ cm$^{-1}$, (Mo-$K_\alpha$)$=0.71069$Å.

The crystal lattice consists of regularly packed alternate molecules of the two isomers A and B, each with the trifluoromethyl group *trans* to the cyclopropane group across the double bond (i.e. the Z-configuration). The unit cell contains 4 molecules of each enantiomeric isomer.

The invention is illustrated by the following Examples.

In the Examples, isomer A is referred to as the 1R, *cis*-S isomer, i.e. the isomer having the (R) configuration at the carbon atom of the cyclopropane ring attached to the carboxylate group, *cis* referring to the relationship between the two hydrogen atoms on the cyclopropane ring and having the (S) configuration at the carbon atom bearing the cyano group. Isomer B is referred to the 1S, *cis*-R isomer, isomer C as the 1R,*cis*-R and isomer D as the 1S,*cis*-S isomer.

3

Example 1

This Example illustrates the separation of α - cyano - 3 - phenoxybenzyl *cis* - 3 - (Z - 2 - chloro - 3,3,3 - trifluoroprop - 1 - en - 1 - yl) - 2,2 - dimethylcyclopropane carboxylate into its constituent pairs of enantiomeric isomers.

The material to be separated was characterised by thin layer chromatographic separation of a sample on 0.25 mm (analytical grade) silica gel plates using various eluents. There was slight separation of two components corresponding to the two pairs of enantiomers present. The mean $R_f$ values for the two components were as follows:

| Eluent diethyl ether:*n*-hexane | $R_f$ (average) | $\Delta R_f$ |
|---|---|---|
| 10:90 | 0.22 | 0.025 |
| 15:85 | 0.28 | 0.030 |
| 20:80 | 0.33 | |

Separation of the material was achieved by use of high performance liquid chromatography using a Waters Associates System 500 apparatus fitted with a "PrepPAK-500" silica column. This was loaded with 0.5 g of cyhalothrin consisting of a 55:45 mixture of the 1S,*cis*-S/1R,*cis*-R:1R,*cis*-S/1S,*cis*-R enantiomer pairs. The eluent was diethyl ether/petroleum ether (boiling range 40—60°C) mixture (1:9) and the flow rate was 0.2 litres per minute. Fractions were collected after four recycles. The first fraction was identified by proton magnetic resonance spectroscopy as the 1R,*cis*-R/1S,*cis*-S enantiomer pair and the second fraction as the 1R,*cis*-S/1S,*cis*-R enantiomer pair. Each fraction had a purity of ca. 98% and together corresponded to about 60% of the amount injected. The p.m.r. data is set out as follows (δ values in CDCl$_3$):

| 1R,*cis*-S/1S,*cis*-R | | 1S,*cis*-S/1R,*cis*-R | |
|---|---|---|---|
| 1.21<br>1.30 | (d) | 1.34 | (s) |
| 1.98<br>2.07<br>2.19<br>2.29<br>2.38 | (m) | 1.98<br>2.07<br>2.19<br>2.29<br>2.38 | (m) |
| 6.38 | (s) | 6.32 | (s) |
| 6.77<br>6.87 | (d) | 6.77<br>6.87 | (d) |
| 6.97—7.50 | (m) | 6.97—7.50 | (m) |

Example 2

This Example illustrates the crystallisation of the 1R,*cis*-S/1S,*cis*-R enantiomer pair from a solution of cyhalothrin. The crystals used for seeding were obtained by the process of Example 1 above.

455.6 g of a mixture of *cis*-isomers of α - cyano - 3 - phenoxybenzyl 3 - (Z - 2 - chloro - 3,3,3 - trifluoroprop - 1 - en - 1 - yl) - 2,2 - dimethylcyclopropane carboxylate, containing 43.2% by weight of the 1R,*cis*-S and 1S,*cis*-R isomers and 56.8% by weight of the 1S,*cis*-S and 1R,*cis*-R isomers was dissolved in 460 ml of isopropanol that had been previously dried by distillation from calcium hydride. Dissolution was effected by warming the mixture to approximately 50°C. The solution was cooled to 3°C whilst stirring with a polytetrafluoroethylene coated magnet, then seeded with a few crystals of a mixture of 1R,*cis*-S and 1S,*cis*-R isomers of α - cyano - 3 - phenoxybenzyl 3 - (Z - 2 - chloro - 3,3,3 - trifluoroprop - 1 - en - 1 - yl) - 2,2 - dimethylcyclopropane carboxylate. Stirring was continued at that temperature for 9 days then the suspension cooled to −10°C and stirred vigorously with a polytetrafluoroethylene paddle for 7 days.

The solid which had separated out was filtered off at 3°C, sucked dry, washed once with 100 ml of 40—60° petroleum ether at 3°C and dried to constant weight in a vacuum desiccator over phosphorus pentoxide to give 97.6 g of white crystals. This product was shown by capillary gas liquid chromatography to contain 86.9% by weight of a 1:1 mixture of the 1R,*cis*-S and 1S,*cis*-R isomers of the starting material.

The solid was dissolved in 300 ml of dry 40—50° petroleum ether, the solution cooled to 3°C with stirring and a few crystals of a mixture of 1R,*cis*-S and 1S,*cis*-R isomers of α - cyano - 3 - phenoxybenzyl 3 - (Z - 2 - chloro - 3,3,3 - trifluoroprop - 1 - en - 1 - yl) - 2,2 - dimethylcyclopropane carboxylate, added as seed. After 2 hours the resultant white suspension was filtered at 3°C and the solid sucked dry. Further drying in a vacuum desiccator over phosphorus pentoxide gave 73.6 g of a white solid containing 92% by weight of a mixture of the 1R,*cis*-S and 1S,cis-R isomers of α - cyano - 3 - phenoxybenzyl 3 - (Z - 2 - chloro - 3,3,3 - trifluoro - prop - 1 - en - 1 - yl) - 2,2 - dimethylcyclopropane carboxylate, melting in the range 36—42°C.

Example 3

A mixture of cyhalothrin isomers consisting of 6.4 g of the 1R,*cis*-S isomer, 6.4 g of the 1S,*cis*-R isomer, 3.2 g of the 1S,*cis*-S isomer and 3.2 g of the 1R,*cis*-R isomer was dissolved in *n*-hexane (20 ml) and stirred under a nitrogen atmosphere whilst maintaining the temperature at −5°C. After dissolution and cooling a few milligrams of the racemic mixture (obtained by the process of Example 2 and further purified by recrystallisation until the melting point was 41.5—42.0°C) was added and the stirring continued for 16 hours at −5°C. The precipitated solid was collected by filtration on a sintered glass funnel cooled to 0°C and washed twice with hexane cooled to −5°C. There was thus obtained 9.30 g of a material m.p. 48—49.5°C having a purity of at least 99% with respect to cyhalothrin isomers and consisting of at least 96.3% of the 1R,*cis*-S and 1S,*cis*-R isomers in equal proportions.

Infra red analysis indicates it to be different from the product of Example 2. The crystalline form is also different (rhomboid rather than needles) and this together with the higher melting point indicates it to be the racemic compound in which individual crystals contain equal amounts of the 1R,*cis*-S and 1S,*cis*-R isomers, both molecules being disposed in a regular arrangement throughout the crystal lattice.

Infra red (liquid paraffin mull): 1050, 1030, 1010, 990, 970 (shoulder) 963, 950, 935, 920, 908, 904, 895, 888, 873, 838, 830 (shoulder) 820, 805, 795, 785, 760, 748, 725, 702, 695, 650 cm$^{-1}$.

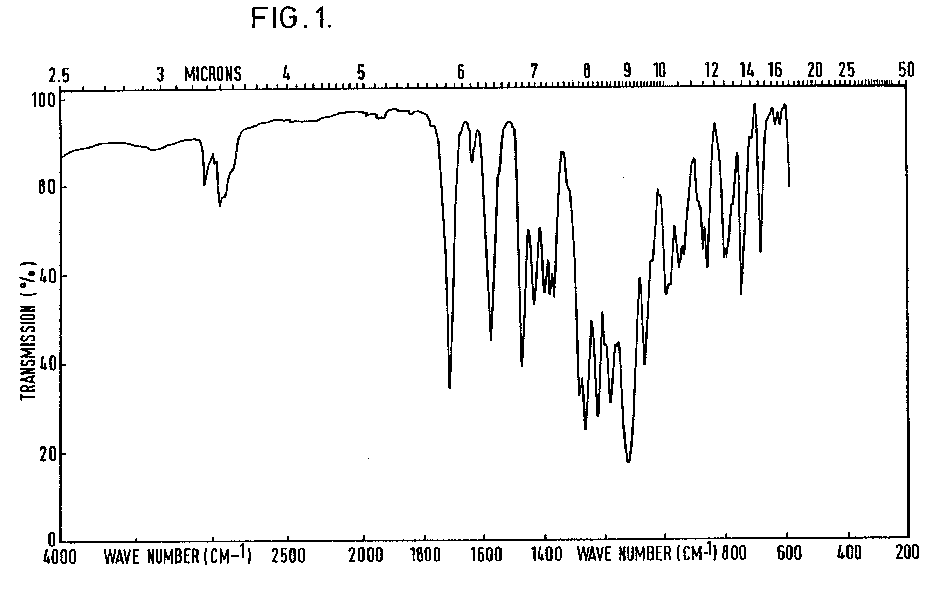

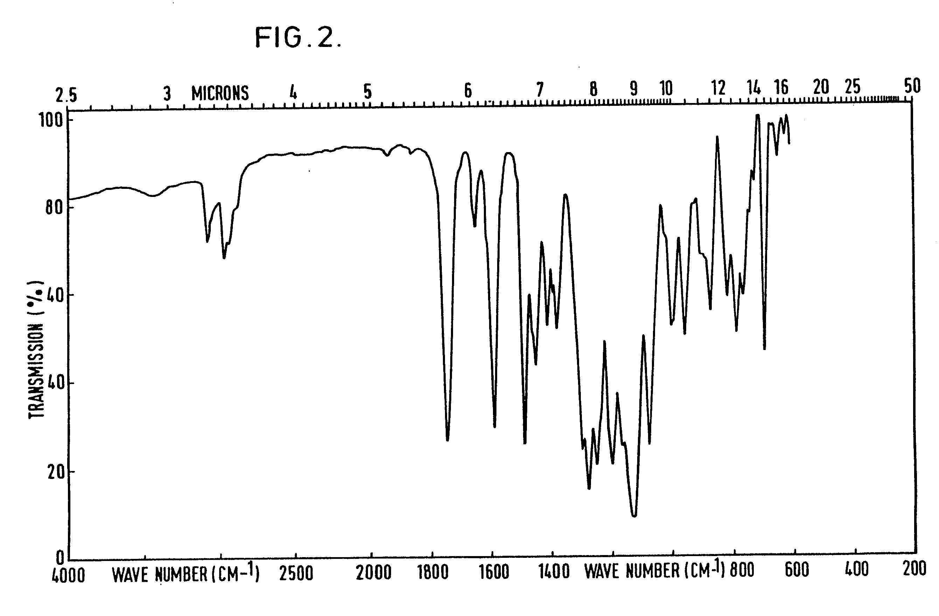

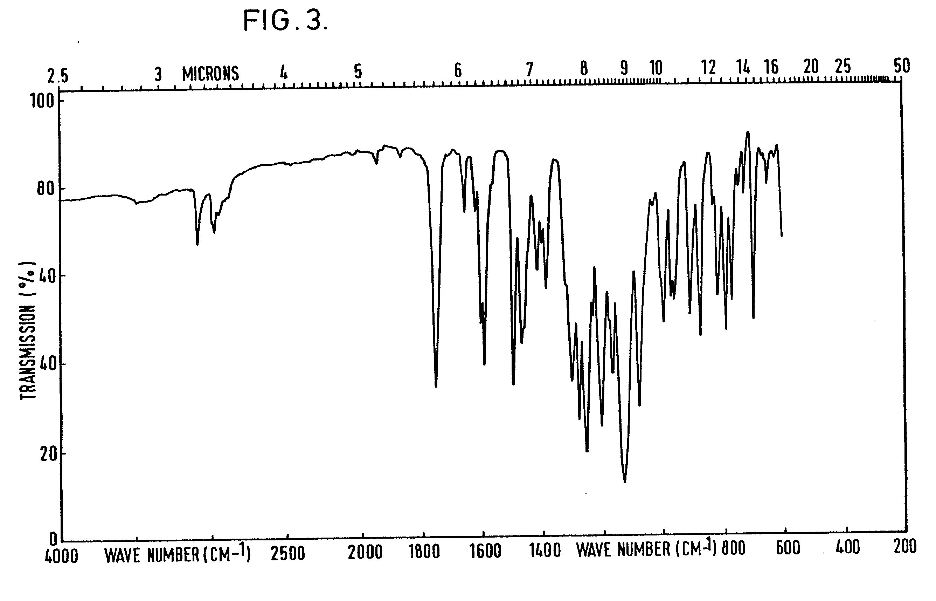

Figures 1 and 2 show the infra red spectra for the product of this Example and that of the product of Example 2 respectively. Figure 3 shows the infra red spectrum for the 1R,*cis*-S isomer alone. It can be seen that the spectrum for the product of Example 2 and that of the 1R,*cis*-S isomer alone are identical, indicating that the product of Example 2 is a conglomerate or racemic mixture, whereas the different spectrum for the product of Example 3 indicates it to be the racemic compound.

Example 4

A mixture of cyhalothrin isomers consisting of 20.61 g of isomer A, 20.61 g of isomer B, 4.04 g of isomer C and 4.04 g of isomer D was dissolved in warm hexane (100 ml), cooled to 5°C and a small quantity of the Product of Example 3 added. The mixture was then cooled slowly to −5°C with vigorously agitation.

The precipitate was collected by filtration, washed on the filter with cold hexane and air dried, to yield the racemic compound of the 1R,*cis*-S and 1S,*cis*-R isomers, (28.6 g) m.p. 49—50°C.

Example 5

This Example illustrates the effect of different solvents, ratios of solvent to cyhalothrin, time periods and temperatures on the yield and quality of Product in the form of the racemic mixture (Product I). The cyhalothrin used contained 42% (±1%) of the 1R,*cis*-S/1S,*cis*-R enantiomeric pair of isomers. In each experiment a few milligrams of crystals of the racemic mixture were added after cooling to the desired temperature to assist nucleation. The results are set out in Table I.

Example 6

This Example illustrates the precipitation of the racemic compound form of the Product (Product II). A mixture of technical cyhalothrin (200 g, purity 95.8% by weight) and isopropanol (200 ml) was charged to a round bottomed glass flask containing a number of glass beads, cooled to −5°C and crystals of the racemic compound (4.0 g) added. The cooled mixture was agitated for 23 hours at −5°C by rotating the flask. The precipitate was collected by slurrying the mixture into a precooled jacketted sinter kept at −5°C and the filter cake washed by slurrying with precooled *n*-hexane (one bed volume) to yield (after drying) the racemic compound consisting of the 1R,*cis*-S and 1S,*cis*-R isomers of cyhalothrin, (39.5 g), melting point 49.5—50°C.

0 106 469

TABLE I

| Experiment No. | Wt. of cyhalothrin (g) | Solvent/ volume (ml) | Temperature °C/ time period (days) | Wt. of precipitate (g) | % Content of 1R,*cis*-S/1S,*cis*-R isomer pair in precipitate |
|---|---|---|---|---|---|
| 1 | 5.0 | ethanol/ 5.0 | 3/8 | 0.26 | 84.3 |
| 2 | 10.0 | n-propanol 10.0 | 3/11 | 1.03 | 86.7 |
| 3 | 50.0 | n-propanol 50.0 | 3/12 followed by −10/4 | 8.7 | 91.9 |
| 4 | 5.0 | n-butanol 5.0 | 3/33 | 0.14 | 86.9 |
| 5 | 5.0 | sec-butanol 5.0 | 3/8 | 0.41 | 82.6 |
| 6 | 10.0 | iso-butanol 10.0 | 3/11 | 1.18 | 79.0 |
| 7 | 5.0 | t-butanol/ iso-propanol (1:1) 10.0 | 3/14 | 0.64 | 88.3 |
| 8 | 5.0 | n-pentanol 5.0 | 3/33 | 0.64 | 68.8 |
| 9 | 10.0 | isopropanol 5.0 | 3/11 | 0.97 | 79.1 |
| 10 | 10.5 | n-hexane 10.0 | 0/9 | 0.61 | 99.1 |
| 11 | 10.0 | n-heptane 10.0 | 3/22 | 0.48 | 98.6 |
| 12 | 9.6 | n-heptane 10.0 | 3/11 | 0.73 | 96.5 |
| 13 | 10.0 | 2,2,4-tri- methylpentane 10.0 | 3/8 | 1.17 | 80.3 |
| 14 | 2000 | n-hexane 2000 | 0/18 followed by −5/7 | 406 | 93.3* |
| 15+ | 200.0 | iso-propanol 200 | 0/7 | 26.5** | 92.0 |
| 16+ | 204.0 | isopropanol 200 | 5/7 | 9.6** | 97.0 |

\*   After recrystallisation from petroleum ether (40—60°C); weight 281 g.
\*\* Excludes weight of seed crystals.
+   4.0 g of seed crystals added.

6

**0 106 469**

**Claims for the Contracting States: BE, CH, DE, FR, GB, IT, LI, LU, NL, SE**

1. A process for obtaining a crystalline material consisting essentially of the enantiomeric pair of isomers represented by (S) - α - cyano - 3 - phenoxybenzyl (1R,*cis*) - 3 - (Z - 2 - chloro - 3,3,3 - trifluoroprop - 1 - en - 1 - yl) - 2,2 - dimethylcyclopropane carboxylate and (R) - α - cyano - 3 - phenoxybenzyl (1S,*cis*) - 3 - (Z - 2 - chloro - 3,3,3 - trifluoroprop - 1 - en - 1 - yl) - 2,2 - dimethylcyclopropane carboxylate in racemic proportions and substantially free from any other isomer of α - cyano - 3 - phenoxybenzyl 3 - (2 - chloro - 3,3,3 - trifluoroprop - 1 - en - 1 - yl) - 2,2 - dimethylcyclopropane carboxylate which comprises the steps of:—

(a) forming a concentrated solution of cyhalothrin with an organic solvent selected from lower alkanols containing up to 6 carbon atoms and liquid alkanes containing up to 8 carbon atoms,

(b) cooling the solution to a temperature within the range −20°C to +10°C and adding a quantity of crystals of the enantiomeric pair of isomers to the solution when cooled, the added crystals remaining thereafter in the solid undissolved state,

(c) maintaining the solution at a temperature within the said temperature range for a sufficient period to allow the crystalline material to precipitate from the solution,

(d) separating the precipitated crystalline material from the solution, and

(e) optionally, if required, subjecting the crystalline material to recrystallisation until it is substantially free from any other isomer of α - cyano - 3 - phenoxybenzyl 3 - (2 - chloro - 3,3,3 - trifluoroprop - 1 - en - 1 - yl) - 2,2 - dimethylcyclopropane carboxylate.

2. A process according to claim 1 wherein the solution is formed from cyhalothrin and the solvent in a ratio of from 2:1 to 1:5 parts by weight.

3. A process according to claim 1 wherein the solvent is isopropanol.

4. A crystalline material consisting essentially of the enantiomeric pair of isomers represented by (S) - α - cyano - 3 - phenoxybenzyl, 1R,*cis* - 3 - (Z - 2 - chloro - 3,3,3 - trifluoroprop - 1 - en - 1 - yl) - 2,2 - dimethylcyclopropane carboxylate and (R) - α - cyano - 3 - phenoxybenzyl 1S,*cis* - 3 - (Z - 2 - chloro - 3,3,3 - trifluoroprop - 1 - en - 1 - yl) - 2,2 - dimethylcyclopropane carboxylate in racemic proportions and substantially free from any other isomer of α - cyano - 3 - phenoxybenzyl 3 - (2 - chloro - 3,3,3 - trifluoroprop - 1 - en - 1 - yl) - 2,2 - dimethylcyclopropane carboxylate and having a melting point greater than 47°C.

5. The enantiomeric pair of isomers according to claim 4 having a melting point within the range 48—50°C.

6. A crystalline material consisting essentially of the enantiomeric pair of isomers according to claim 4 in the form of the racemic compound of the isomers characterised in that the infra-red absorption spectrum is distinguishable from that of either of the isomers in crystalline form in isolation.

7. The crystalline form of the enantiomeric pair of isomers according to claim 6 in which the crystal lattice has the following characteristics:

Space group $C2/c$, $1$=34.764(5)Å, $b$=7.023(2)Å $c$=18.624(3)Å, $\beta$=101.95(3)Å, $\mu$=4448.46Å$^3$, Z=8.

8. The enantiomeric pair of isomers according to claim 6 in the form of crystals of monoclinic form having a density of 1.343 g cm$^{-1}$.

**Claims for the Contracting State: AT**

1. A process for obtaining a crystalline material consisting essentially of the enantiomeric pair of isomers represented by (S) - α - cyano - 3 - phenoxybenzyl (1R,*cis*) - 3 - (Z - 2 - chloro - 3,3,3 - trifluoroprop - 1 - en - 1 - yl) - 2,2 - dimethylcyclopropane carboxylate and (R) - α - cyano - 3 - phenoxybenzyl (1S,*cis*) - 3 - (Z - 2 - chloro - 3,3,3 - trifluoroprop - 1 - en - 1 - yl) - 2,2 - dimethylcyclopropane carboxylate in racemic proportions and substantially free from any other isomer of α - cyano - 3 - phenoxybenzyl 3 - (2 - chloro - 3,3,3 - trifluoroprop - 1 - en - 1 - yl) - 2,2 - dimethylcyclopropane carboxylate which comprises the steps of:—

(a) forming a concentrated solution of cyhalothrin with an organic solvent selected from lower alkanols containing up to 6 carbon atoms and liquid alkanes containing up to 8 carbon atoms,

(b) cooling the solution to a temperature within the range −20°C to +10°C and adding a quantity of crystals of the enantiomeric pair of isomers to the solution when cooled, the added crystals remaining thereafter in the solid undissolved state,

(c) maintaining the solution at a temperature within the said temperature range for a sufficient period to allow the crystalline material to precipitate from the solution,

(d) separating the precipitated crystalline material from the solution, and

(e) optionally, if required, subjecting the crystalline material to recrystallisation until it is substantially free from any other isomer of α - cyano - 3 - phenoxybenzyl 3 - (2 - chloro - 3,3,3 - trifluoroprop - 1 - en - 1 - yl) - 2,2 - dimethylcyclopropane carboxylate.

2. A process according to claim 1 wherein the solution is formed from cyhalothrin and the solvent in a ratio of from 2:1 to 1:5 parts by weight.

3. A process according to claim 1 wherein the solvent is isopropanol.

**Patentansprüche für die Vertragsstaaten: BE, CH, DE, FR, GB, IT, LI, LU, NL, SE**

1. Verfahren zur Herstellung eines kristallinen Materials, welches im wesentlichen aus dem enantiomeren Isomerenpaar (1R,cis) - 3 - (Z - 2 - Chloro - 3,3,3 - trifluoroprop - 1 - en - 1 - yl) - 2,2 - dimethylcyclopropancarbonsäure - (S) - α - cyano - 3 - phenoxybenzyl - ester und (1S,cis) - 3 - (Z - 2 - Chloro - 3,3,3 - trifluoroprop - 1 - en - 1 - yl) - 2,2 - dimethylcyclopropancarbonsäure - (R) - α - cyano - 3 - phenoxybenzyl - ester im racemischen Verhältnis besteht und weitgehend frei von jedem anderen Isomer des 3 - (2 - Chloro - 3,3,3 - trifluoroprop - 1 - en - 1 - yl) - 2,2 - dimethylcyclopropancarbonsäure - α - cyano - 3 - phenoxybenzyl - esters ist, welches die folgenden Stufen umfaßt:

(a) Herstellung einer konzentrierten Lösung von Cyhalothrin in einem organischen Lösungsmittel, das ausgewählt ist aus niederen Alkanolen mit bis zu 6 Kohlenstoffatomen und flüssigen Alkanen mit bis zu 8 Kohlenstoffatomen,

(b) Abkühlen der Lösung auf eine Temperatur innerhalb des Bereichs von −20 bis +10°C und Zugabe einer Menge von Kristallen des enantiomeren Isomerenpaars zur abgekühlten Lösung, worauf die zugegebenen Kristalle im festen, ungelösten Zustand verbleiben,

(c) Halten der Lösung auf eine Temperatur innerhalb des genannten Bereichs während einer ausreichenden Zeit, daß das kristalline Material aus der Lösung ausfällt,

(d) Abtrennen des ausgefallenen kristallinen Materials von der Lösung, und

(e) gegebenenfalls, sofern erforderlich, Unterwerfen des kristallinen Materials einer Umkristallisation, bis es weitgehend frei von jedem anderen Isomer des 3 - (2 - Chloro - 3,3,3 - trifluoroprop - 1 - en - 1 - yl) - 2,2 - dimethylcyclopropancarbonsäure - α - cyano - 3 - phenoxybenzyl - esters ist.

2. Verfahren nach Anspruch 1, bei welchem die Lösung aus dem Cyhalothrin und dem Lösungsmittel unter Einhaltung eines Gewichtsverhältnisses von 2:1 bis 1:5 hergestellt wird.

3. Verfahren nach Anspruch 1, bei welchem das Lösungsmittel Isopropanol ist.

4. Kristallines Material, welches im wesentlichen aus dem enantiomeren Isomerenpaar 1R,cis - 3 - (Z - 2 - Chloro - 3,3,3 - trifluoroprop - 1 - en - 1 - yl) - 2,2 - dimethylcyclopropancarbonsäure - (S) - α - cyano - 3 - phenoxybenzyl - ester und 1S,cis - 3 - (Z - 2 - Chloro - 3,3,3 - trifluoroprop - 1 - en - 1 - yl) - 2,2 - dimethylcyclopropancarbonsäure - (R) - α - cyano - 3 - phenoxybenzyl - ester im racemischen Verhältnis besteht und weitgehend frei von jedem anderen Isomer des 3 - (2 - Chloro - 3,3,3 - trifluoroprop - 1 - en - 1 - yl) - 2,2 - dimethylcyclopropancarbonsäure - α - cyano - 3 - phenoxybenzyl - esters ist und einen Schmelzpunkt von mehr als 47°C aufweist.

5. Das enantiomere Isomerenpaar gemäß Anspruch 4, welches einen Schmelzpunkt im Bereich von 48 bis 50°C aufweist.

6. Kristallines Material, welches im wesentlichen aus dem enantiomeren Isomerenpaar gemäß Anspruch 4 in Form der racemischen Verbindung der Isomeren besteht, dadurch gekennzeichnet, daß das Infrarotabsorptionsspektrum sich von demjenigen eines jeden der isolierten Isomeren in kristalliner Form unterscheidet.

7. Die kristalline Form des enantiomeren Isomerenpaars nach Anspruch 6, bei welchem das Kristallgitter die folgende Charakterisierung aufweist:

Abstandsgruppe C2/c, 1=34,764(5)Å, b=7,023(2)Å c=18,624(3)Å, β=101,95(3)Å, μ=4448,46Å, Z=8.

8. Das enantiomere Isomerenpaar nach Anspruch 6 in Form von Kristallen mit monokliner Form einer Dichte von 1,343 g cm⁻¹.

**Patentansprüche für den Vertragsstaat AT:**

1. Verfahren zur Herstellung eines kristallinen Materials, welches im wesentlichen aus dem enantiomeren Isomerenpaar (1R,cis) - 3 - (Z - 2 - Chloro - 3,3,3 - trifluoroprop - 1 - en - 1 - yl) - 2,2 - dimethylcyclopropancarbonsäure - (S) - α - cyano - 3 - phenoxybenzyl - ester und (1S,cis) - 3 - (Z - 2 - Chloro - 3,3,3 - trifluoroprop - 1 - en - 1 - yl) - 2,2 - dimethylcyclopropancarbonsäure - (R) - α - cyano - 3 - phenoxybenzyl - ester im racemischen Verhältnis besteht und weitgehend frei von jedem anderen Isomer des 3 - (2 - Chloro - 3,3,3 - trifluoroprop - 1 - en - 1 - yl) - 2,2 - dimethylcyclopropancarbonsäure - α - cyano - 3 - phenoxybenzyl - esters ist, welches die folgenden Stufen umfaßt:

(a) Herstellung einer konzentrierten Lösung von Cyhalothrin in einem organischen Lösungsmittel, das ausgewählt ist aus niederen Alkanolen mit bis zu 6 Kohlenstoffatomen und flüssigen Alkanen mit bis zu 8 Kohlenstoffatomen,

(b) Abkühlen der Lösung auf eine Temperatur innerhalb des Bereichs von −20 bis +10°C und Zugabe einer Menge von Kristallen des enantiomeren Isomerenpaars zur abgekühlten Lösung, worauf die zugegebenen Kristalle im festen, ungelösten Zustand verbleiben,

(c) Halten der Lösung auf eine Temperatur innerhalb des genannten Bereichs während einer ausreichenden Zeit, daß das kristalline Material aus der Lösung ausfällt,

(d) Abtrennen des ausgefallenen kristallinen Materials von der Lösung, und

(e) gegebenenfalls, sofern erforderlich, Unterwerfen des kristallinen Materials einer Umkristallisation, bis es weitgehend frei von jedem anderen Isomer des 3 - (2 - Chloro - 3,3,3 - trifluoroprop - 1 - en - 1 - yl) - 2,2 - dimethylcyclopropancarbonsäure - α - cyano - 3 - phenoxybenzyl - esters ist.

2. Verfahren nach Anspruch 1, bei welchem die Lösung aus dem Cyhalothrin und dem Lösungsmittel unter Einhaltung eines Gewichtsverhältnisses von 2:1 bis 1:5 hergestellt wird.

3. Verfahren nach Anspruch 1, bei welchem das Lösungsmittel Isopropanol ist.

**Revendications pour les Etats contractants: BE, CH, DE, FR, GB, IT, LI, LU, NL, SE**

1. Procédé pour obtenir une matière cristalline consistant essentiellement en la paire énantiomérique d'isomères représentés par le (1R,*cis*) - 3 - (Z - 2 - chloro - 3,3,3 - trifluoroprop - 1 - ène - 1 - yl) - 2,2 - diméthylcyclopropanecarboxylate de (S) - α - cyano - 3 - phénoxybenzyle et le (1S,*cis*) - 3 - (Z - 2 - chloro - 3,3,3 - trifluoroprop - 1 - ène - 1 - yl) - 2,2 - diméthylcyclopropane - carboxylate de (R) - α - cyano - 3 - phénoxybenzyle dans des proportions racémiques et pratiquement dépourvus de tout autre isomère de 3 - (2 - chloro - 3,3,3 - trifluoroprop - 1 - ène - 1 - yl) - 2,2 - diméthylcyclopropane - carboxylate d'α - cyano - 3 - phénoxybenzyle, qui comprend les étapes consistant:

(a) à former une solution concentrée de cyhalothrine avec un solvant organique choisi entre des alcanols inférieurs contenant jusqu'à 6 atomes de carbone et des alcanes liquides contenant jusqu'à 8 atomes de carbone,

(b) à refroidir la solution à une température comprise dans l'intervalle de −20°C à +10°C et à ajouter des cristaux de la paire énantiomérique d'isomères à la solution une fois refroidie, les cristaux ajoutés restant ensuite à l'état solide non dissous,

(c) à maintenir la solution à une température comprise dans ledit intervalle pendant une durée suffisante pour que la matière cristalline puisse précipiter dans la solution,

(d) à séparer la matière cristalline précipitée de la solution et

(e) à titre facultatif, si on le désire, à soumettre la matière cristalline à une recristallisation jusqu'à ce qu'elle soit pratiquement dépourvue de tout autre isomère de 3 - (2 - chloro - 3,3,3 - trifluoroprop - 1 - ène - 1 - yl) - 2,2 - diméthylcyclopropane - carboxylate d'α - cyano - 3 - phénoxybenzyle.

2. Procédé suivant la revendication 1, dans lequel la solution est formée de cyhalothrine et du solvant dans un rapport, en parties en poids, de 2:1 à 1:5.

3. Procédé suivant la revendication 1, dans lequel le solvant est l'isopropanol.

4. Matière cristalline consistant essentiellement en la paire énantiomérique d'isomères représentés par le 1R,*cis* 3 - (Z - 2 - chloro - 3,3,3 - trifluoroprop - 1 - ène - 1 - yl) - 2,2 - diméthylcyclopropane - carboxylate de (S) - α - cyano - 3 - phénoxybenzyle et le 1S,*cis* - 3 - (Z - 2 - chloro - 3,3,3 - trifluoroprop - 1 - ène - 1 - yl) - 2,2 - diméthylcyclopropane - carboxylate de (R) - α - cyano - 3 - phénoxybenzyle dans des proportions racémiques et pratiquement dépourvus de tout autre isomère de 3 - (2 - chloro - 3,3,3 - trifluoroprop - 1 - ène - 1 - yl) - 2,2 - diméthylcyclopropane - carboxylate d'α - cyano - 3 - phénoxybenzyle et ayant un point de fusion supérieur à 47°C.

5. La paire énantiomérique d'isomères suivant la revendication 4 ayant un point de fusion dans l'intervalle de 48 à 50°C.

6. Matière cristalline consistant essentiellement en la paire enantiomérique d'isomères suivant la revendication 4 sous la forme du composé racémique des isomères, caractérisée en ce que le spectre d'absorption infrarouge peut être distingué de celui de l'un ou l'autre des isomères sous la forme cristalline, considérés isolément.

7. La forme cristalline de la paire anantiomérique d'isomères suivant la revendication 6, dans laquelle le réseau cristallin présente les caractéristiques suivantes:

groupe spatial $C2/c$, $1=34,764(5)$Å, $b=7,023(2)$Å $c=18,624(3)$Å, $\beta=101,95(3)$Å, $U=4448,46$Å$^3$, $Z=8$.

8. La paire énantiomérique d'isomères suivant la revendication 6 sous la forme de cristaux monocliniques ayant une densité de 1,343 g cm$^{-1}$.

**Revendications pour l'Etat contractant AT:**

1. Procédé pour obtenir une matière cristalline consistant essentiellement en la paire énantiomérique d'isomères représentés par le (1R,*cis*) - 3 - (Z - 2 - chloro - 3,3,3 - trifluoroprop - 1 - ène - 1 - yl) - 2,2 - diméthylcyclopropanecarboxylate de (S) - α - cyano - 3 - phénoxybenzyle et le (1S,*cis*) - 3 - (Z - 2 - chloro - 3,3,3 - trifluoroprop - 1 - ène - 1 - yl) - 2,2 - diméthylcyclopropane - carboxylate de (R) - α - cyano - 3 - phénoxybenzyle dans des proportions racémiques et pratiquement dépourvus de tout autre isomère de 3 - (2 - chloro - 3,3,3 - trifluoroprop - 1 - ène - 1 - yl) - 2,2 - diméthylcyclopropane - carboxylate d'α - cyano - 3 - phénoxybenzyle, qui comprend les étapes consistant:

(a) à former une solution concentrée de cyhalothrine avec un solvant organique choisi entre des alcanols inférieurs contenant jusqu'à 6 atomes de carbone et des alcanes liquides contenant jusqu'à 8 atomes de carbone,

(b) à refroidir la solution à une température comprise dans l'intervalle de −20°C à +10°C et à ajouter des cristaux de la paire énantiomérique d'isomères à la solution une fois refroidie, les cristaux ajoutés restant ensuite à l'état solide non dissous,

(c) à maintenir la solution à une température comprise dans ledit intervalle pendant une durée suffisante pour que la matière cristalline puisse précipiter dans la solution,

(d) à séparer la matière cristalline précipitée de la solution et

(e) à titre facultatif, si on le désire, à soumettre la matière cristalline à une recristallisation jusqu'à ce qu'elle soit pratiquement dépourvue de tout autre isomère de 3 - (2 - chloro - 3,3,3 - trifluoroprop - 1 - ène - 1 - yl) - 2,2 - diméthylcyclopropane - carboxylate d'α - cyano - 3 - phénoxybenzyle.

2. Procédé suivant la revendication 1, dans lequel la solution est formée de cyhalothrine et du solvant dans un rapport, en parties en poids, de 2:1 à 1:5.

3. Procédé suivant la revendication 1, dans lequel le solvant est l'isopropanol.

FIG.1.

FIG.2.

# FIG.3.